# EUROPEAN PATENT APPLICATION

(11) **EP 4 730 534 A1**
(43) Date of publication of application: **22.04.2026**
(21) Application number: 25787013.9
(22) Date of filing: 07.02.2025
(51) Int. Cl.: H01M 50/342, H01M 50/383, H01M 10/658, H01M 50/204, H01M 50/249

(54) **BATTERY MODULE**

(30) Priority: 08.04.2024 KR 20240047537; 21.01.2025 KR 20250008861
(71) Applicant: LG Energy Solution, Ltd., Seoul 07335 (KR)
(72) Inventor: PARK, Min-Soo, Daejeon 34122 (KR); KIM, Kwang-Mo, Daejeon 34122 (KR); LEE, Jung-Hoon, Daejeon 34122 (KR)
(74) Representative: Plasseraud IP
(86) International application number: PCT/KR2025/001832
(87) International publication number: WO 2025/216415

(57) **Abstract**

A battery module according to an embodiment of the present disclosure includes: a frame that provides an internal space and including a bottom plate and a top plate facing the bottom plate; a plurality of battery cells positioned on the bottom plate and stacked in one direction; and an elastic pad compressed between the multiple battery cells and the top plate.

## Description

### TECHNICAL FIELD

The present disclosure relates to a battery module.

This application is based on and claims priority from Korean Patent Application No. 10-2024-0047537, filed on April 8, 2024, with the Korean Intellectual Property Office, and Korean Patent Application No. 10-2025-0008861, filed on January 21, 2025, with the Korean Intellectual Property Office, the disclosures of which are incorporated herein in their entirety by reference.

### BACKGROUND ART

With the significant increase in demand for portable electronic devices such as smartphones, tablet PCs, and smartwatches, as along with the growing distribution of electric vehicles, extensive research is being actively conducted on batteries, particularly secondary batteries capable of repeated charging and discharging.

Existing commercially available secondary batteries include, for example, nickel-cadmium batteries, nickel-hydrogen batteries, nickel-zinc batteries, and lithium secondary batteries. Among these batteries including the nickel-based secondary batteries, lithium secondary batteries are attracting more attention due to their advantages such as free charging and discharging due to little memory effect, very low self-discharge rate, and high energy density.

Such lithium secondary batteries mainly use lithium-based oxides and carbon materials as positive and negative active materials, respectively. The lithium secondary batteries include an electrode assembly in which positive and negative electrode plates are coated with the positive and negative active materials, respectively, and disposed with a separator interposed therebetween. The lithium secondary batteries also include an exterior material, such as for example, a battery case, that seals and accommodates the electrode assembly together with an electrolyte.

In general, depending on the shape of the outer packaging material, lithium secondary batteries may be classified into can-type secondary batteries, in which an electrode assembly is built into a metal can, and pouch-type secondary batteries, in which an electrode assembly is built into a pouch of an aluminum laminate sheet.

Recently, secondary batteries have been widely used not only in small-sized devices such as portable electronic devices but also in medium and large-sized devices such as electric vehicles and energy storage systems (ESS) for driving and energy storage. These secondary batteries may be housed together inside a module case, in a state of being electrically connected in large numbers, to form a single battery module. At this time, each secondary battery included in one battery module may be referred to as a battery cell. In addition, a plurality of battery modules may be connected to form a single battery pack.

When a plurality of battery modules are included in a battery pack, and each battery module contains a plurality of battery cells, the battery pack may be vulnerable to thermal chain reactions between the battery modules or the battery cells. For example, when an event such as thermal runaway occurs within one of the battery modules, it is necessary to suppress the propagation of such thermal runaway to other battery modules or battery cells. When the propagation of thermal runaway between the battery modules or battery cells is not properly suppressed, an event occurring in a specific battery module or battery cell may trigger a chain thermal reaction into other battery modules or battery cells, which may cause an explosion or fire, or the scale of the explosion or fire may be significantly increased.

When an event such as thermal runaway occurs in one of the battery modules, for example, gases or flames may be randomly emitted (e.g., discharged) to the outside. When the discharge of gases or flames is not properly controlled, the gases or flames may be directed toward other battery modules, which may trigger thermal chain reactions in those modules. For example, on the front side of the battery module, there may be a module terminal, and a configuration such as a module busbar, for electrical connection with other battery modules or battery packs. Therefore, when flames are emitted from the front side of this battery module, the module terminals within the battery pack may be damaged, and an electrical short may occur. Furthermore, since there may be other battery modules on the front side of the battery module, flames emitted in this direction could reach adjacent battery modules, making it easier for fire to spread between modules.

When thermal propagation between battery modules or battery cells is not properly controlled, a rapid voltage drop in the battery modules or battery pack may occur. This may lead to a sudden shutdown of the device equipped with the battery modules or battery pack, causing an unexpected damage. For example, when a sudden voltage drop occurs in the battery pack while an electric vehicle is in operation, there may not be enough time to move the vehicle to a safe location.

Furthermore, when a sudden fire or explosion occurs due to failure to properly control thermal propagation between battery modules or battery cells, there is a high possibility of causing injury or even death to users. For example, when thermal runaway occurs in an electric vehicle, passengers may not be able to escape safely unless sufficient time is secured before the situation escalates into a full-scale fire.

### DISCLOSURE

### Technical Problem

An embodiment of the present disclosure provides a battery module with an improved structure to appropriately control the emission of, for example, flames occurring inside the battery module, as well as a battery pack and a vehicle including the same.

An embodiment of the present disclosure provides a battery module structure that allows for the smooth discharge of venting gases generated inside the battery module.

Another embodiment of the present disclosure provides a battery module structure capable of preventing or suppressing venting gases generated externally from entering the interior of a battery module.

### Technical Solution

A battery module according to an embodiment of the present disclosure may include: a frame providing an internal space and including a bottom plate and a top plate facing the bottom plate; a plurality of battery cells positioned on the bottom plate and stacked in one direction; and an elastic pad compressed between the plurality of battery cells and the top plate.

The top plate may include a first venting hole exposing the elastic pad.

The elastic pad may include a score line.

The venting hole may expose the score line.

The score line may be configured to expose a portion of the plurality of battery cells during occurrence of a thermal event.

A plurality of first venting holes may be provided, and a plurality of score lines may be formed to correspond one-to-one with the plurality of first venting holes.

The elastic pad may entirely cover the plurality of battery cells.

The elastic pad may include a polyurethane material.

The battery module may further include a fireproof cover, and the fireproof cover may be coupled, fastened, attached, fixed, or assembled to a top surface of the top plate.

The fireproof cover may include a second venting hole.

The top plate may include a first venting hole exposing the elastic pad, and the first venting hole and the second venting hole may be formed to correspond one-to-one.

The elastic pad may include a score line, and the score line, the first venting hole, and the second venting hole may be aligned in an up-down direction. During the occurrence of a thermal event, venting gas may separate the score line and may be discharged to the outside of the battery module through the first venting hole and the second venting hole.

The battery module may further include a heat transfer member provided between the bottom plate and the plurality of battery cells.

A battery pack according to another aspect of the present disclosure includes the battery module of the present disclosure.

A vehicle according to yet another aspect of the present disclosure includes the battery module of the present disclosure.

### Advantageous Effects

According to at least one embodiment of the present disclosure, the emission of gases or flames generated inside the battery module may be appropriately controlled.

According to at least one embodiment of the present disclosure, the electrical safety of the battery module may be improved.

According to at least one embodiment of the present disclosure, thermal propagation may be suppressed.

According to at least one embodiment of the present disclosure, the transmission of thermal events caused by external flames or gases to the battery module may be suppressed.

### DESCRIPTION OF DRAWINGS

The following drawings attached hereto illustrate example embodiments of the present disclosure and, together with the detailed description to be described later, serve to further understand the technical idea of the present disclosure. Therefore, the present disclosure should not be construed as being limited to the matters illustrated in the drawings.
FIG. 1 is a view illustrating a battery module according to an embodiment of the present disclosure.
FIG. 2 is a partially exploded view of the battery module of FIG. 1.
FIG. 3 is a partially exploded view of a battery array of FIG. 2.
FIG. 4 is a view illustrating an elastic pad of FIG. 2.
FIG. 5A is an exploded view of a score line of FIG. 2.
FIG. 5B is an enlarged view of a venting hole of FIG. 2.
FIG. 6 is an enlarged view of portion A of FIG. 1.
FIG. 7 is an enlarged view of portion A of FIG. 1 during the occurrence of a thermal event.
FIG. 8 is a cross-sectional view taken along cutting line B-B' in FIG. 1.
FIG. 9 is a cross-sectional view taken along cutting line B-B' in FIG. 1 during the occurrence of a thermal event.
FIG. 10 is a cross-sectional view taken along cutting line C-C' in FIG. 1.
FIG. 11 is an enlarged view of portion D in FIG. 10.
FIG. 12 is a cross-sectional view taken along cutting line C-C' in FIG. 1 during the occurrence of a thermal event.
FIG. 13 is an enlarged view of portion E of FIG. 12.
FIG. 14 is a perspective view illustrating a vehicle including a battery module according to an embodiment of the present disclosure.

### BEST MODE

Hereinafter, embodiments of the present disclosure will be described in detail with reference to the accompanying drawings. Prior to this, the terms or words used in the specification and claims should not be construed as limited to their ordinary or dictionary meanings, but should be construed as meanings and concepts consistent with the technical idea of the present disclosure based on the principle that an inventor may appropriately define the concepts of terms in order to explain their invention in the best way.

Therefore, the embodiments described in this specification and the configurations illustrated in the drawings are only embodiments of the present disclosure and do not fully represent the technical idea of the present disclosure. Therefore, it should be understood that there may be various equivalents and modifications that can replace the embodiments and configurations at the time of filing this application.

Terms such as "1^{st}", "2^{nd}", "first", and "second" may be used to simply distinguish a given component from other corresponding components and do not limit the corresponding components in other aspects (e.g., importance or order).

The terms such as "up-down direction" and "front-rear direction" used in the description below are defined based on the drawings, and the shape and position of each component are not limited by these terms.

As used herein, the terms "about," "approximately," and "substantially" are understood to refer to a range or approximation of a numerical value or degree, considering inherent manufacturing and material tolerances.

In consideration of the problems discussed above, the present disclosure provides a battery module improved in structure to appropriately control the emission of, for example, flames generated inside the battery module, and a battery pack and a vehicle including the same.

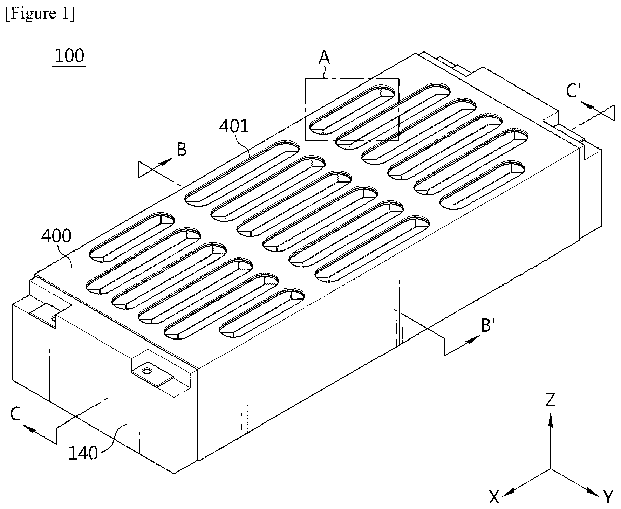

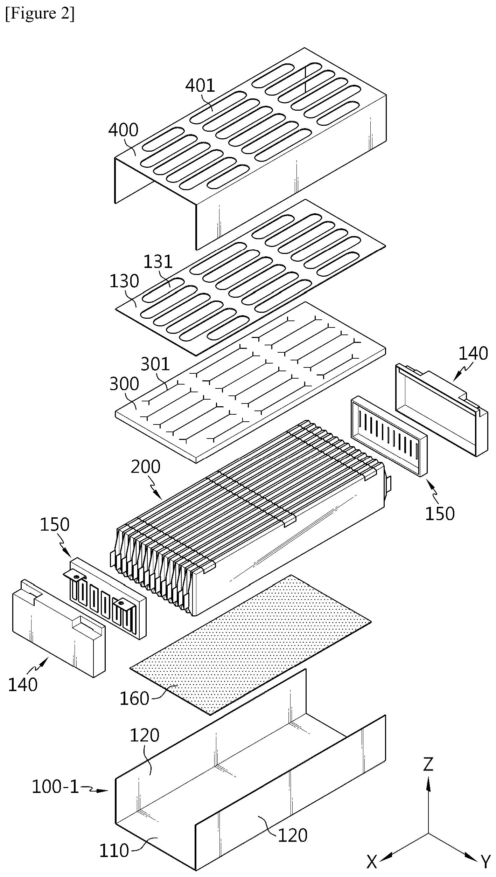

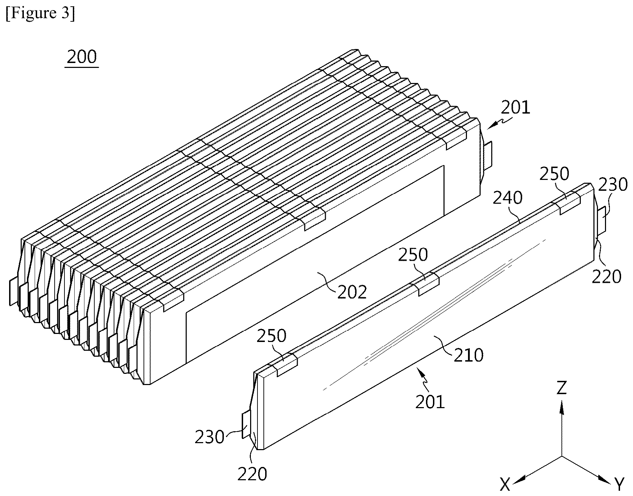

FIG. 1 is a view illustrating a battery module according to an embodiment of the present disclosure. FIG. 2 is a partially exploded view of the battery module of FIG. 1. FIG. 3 is a partially exploded view of the battery array 200 of FIG. 2.

Referring to FIGS. 1 to 3, a battery module according to an embodiment of the present disclosure may include a frame 100, a plurality of battery cells 201, and an elastic pad 300.

The frame 100 may have a rectangular parallelepiped shape. The frame 100 may also be referred to as a case 100. The frame 100 may provide an internal space. The frame 100 may include a top plate 130, a bottom plate 110, and a pair of side plates 120. In addition, the frame 100 may have an open front and rear structure. The top plate 130 and the bottom plate 110 may be arranged to face each other. The pair of side plates 120 may connect the top plate 130 and the bottom plate 110.

The bottom plate 110 and the pair of side plates 120 may be formed integrally. The bottom plate 110 and the pair of side plates 120 formed integrally may be referred to as a lower frame 100-1 or a U-frame 100-1. The top plate 130 may be fastened, coupled, assembled, attached, or fixed to the lower frame 100-1 or the U-frame 100-1. For example, the top plate 130 may be welded to the lower frame 100-1 or the U-frame 100-1.

A plurality of battery cells 201 may be provided. The plurality of battery cells 201 may form a battery array 200. The battery array 200 may be positioned inside the frame 100. In addition, the battery array 200 may be located on the top surface of the bottom plate 110.

Each battery cell 201 may extend in the front-rear direction or the X-axis direction. The plurality of battery cells 201 may be stacked in the left-right direction or the Y-axis direction. In this case, the battery cell 201 may refer to a secondary battery. The battery cell 201 may include a housing 210 that contains an electrode assembly and an electrolyte. In addition, the battery cell 201 may include first seals 220 extending forward and rearward from the housing 210. The battery cell 201 may also include a second seal 240 extending upward from the housing 210. Electrode leads 230 of the battery cell 201 may protrude forward and rearward from the first seals 220, respectively. In particular, the battery cell 201 may be a pouch-type secondary battery. The electrode leads 230 may protrude forward and rearward from each battery cell 201. However, the shape of the battery cell 201 is not limited to a pouch shape and may take various shapes, such as a cylindrical shape or a rectangular parallelepiped shape.

The battery array 200 may include a first adhesive member 202 disposed between each adjacent ones of the battery cells 201. The first adhesive member 202 may secure adjacent battery cells 201. Each battery cell 201 may include a second adhesive member 250. The second adhesive member 250 may fold and secure the second seal 240 toward the housing 210.

The elastic pad 300 may be located between the plurality of battery cells 201 or the battery array 200 and the top plate 130. The elastic pad 300 may have a plate shape. The elastic pad 300 may cover the top surface of the plurality of battery cells 201 or the battery array 200. In addition, the elastic pad 300 may be compressed or fixed between the plurality of battery cells 201 or the battery array 200 and the top plate 130. The elastic pad 300 may also be attached to the top surface of the battery array 200. Furthermore, the elastic pad 300 may be attached to the bottom surface of the top plate 130.

The elastic pad 300 may include an elastic material. For example, the elastic pad 300 may include a polyurethane material. The battery array 200 may be placed in the lower frame 100-1 or the U-frame 100-1, and the elastic pad 300 may be disposed on top of the battery array 200. When the top plate 130 is coupled to the lower frame 100-1 or the U-frame 100-1, the elastic pad 300 may be compressed and installed. For example, the elastic pad 300 may have a thickness of about 2.5 mm before being installed in the frame 100. After installation in the frame 100, the elastic pad 300 may be compressed to a thickness of about 1.8 mm to 2.0 mm.

The elastic pad 300 may be configured to have a relatively low density. For example, the elastic pad 300 may be configured to have a density of about 0.16 g/cm³.

With this configuration of the present disclosure, the thermal safety of the battery module may be improved. When a thermal event occurs in a battery cell 201, the second seal 240 may rupture (*e.g.,* explode), allowing venting gas g to be discharged. At this time, the venting gas g may pass through the elastic pad 300 and may be discharged to the outside of the battery module. The elastic pad 300 may block the flow of the venting gas g within the battery module by filling the space where the venting gas g could otherwise flow. By ensuring the smooth discharge of the venting gas g, the propagation of the thermal event within the battery module may be suppressed.

Referring to FIGS. 1 to 3, the top plate 130 of the battery module according to an embodiment of the present disclosure may include a first venting hole 131. The first venting hole 131 may penetrate the top plate 130 in the up-down direction or the Z-axis direction. The first venting hole 131 may expose the elastic pad 300.

A plurality of first venting holes 131 may be provided. The plurality of first venting holes 131 may expose a plurality of portions of the elastic pad 300 to the outside. As the elastic pad 300 is compressed, the elastic pad 300 may be at least partially accommodated within the first venting holes 131.

With this configuration of the present disclosure, since the elastic pad 300 has a relatively low density, the venting gas g may be prevented or suppressed from flowing inside the frame 100, while not obstructing the discharge of the venting gas g.

With this configuration of the present disclosure, when the battery module is exposed to venting gas g generated externally, the elastic pad 300 may prevent or suppress the external venting gas g from entering the interior of the battery module.

Referring to FIGS. 1 to 3, the battery module, according to an embodiment of the present disclosure, may include a fireproof cover 400. The fireproof cover 400 may be coupled, fastened, attached, fixed, or assembled to the top surface of the top plate 130. In addition, the fireproof cover 400 may be coupled, fastened, attached, fixed, or assembled to the outer surfaces of the pair of side plates 120. The fireproof cover 400 may include a heat-resistant material. Furthermore, the fireproof cover 400 may include a fire-resistant material.

The fireproof cover 400 may include a second venting hole 401. The second venting hole 401 may face a first venting hole 131. In addition, the second venting hole 401 and the first venting hole 131 may be in communication with each other. A plurality of first venting holes 131 and a plurality of second venting holes 401 may be provided, respectively. The plurality of first venting holes 131 and the plurality of second venting holes 401 may be formed and arranged to correspond to each other on a one-to-one basis.

Referring to FIGS. 1 to 3, the battery module according to an embodiment of the present disclosure may include a busbar frame assembly 150, a heat transfer member 160, and an end cover 140.

Busbar frame assemblies 150 may be provided at the front and rear of the plurality of battery cells 201, respectively. The busbar frame assemblies 150 may be electrically connected to the electrode leads 230 of the plurality of battery cells 201.

The heat transfer member 160 may be disposed beneath the plurality of battery cells 201 or the battery array 200. In addition, the heat transfer member 160 may be disposed between the bottom plate 110 and the plurality of battery cells 201 or the battery array 200. The heat transfer member 160 may include a material with high thermal conductivity. For example, the heat transfer member 160 may be made of resin. In addition, the heat transfer member 160 may fix the plurality of battery cells 201 or the battery array 200.

A pair of end covers 140 may be coupled to the front and rear of the frame 100, respectively. The pair of end covers 140 may cover the front and rear surfaces of the frame 100. The end covers 140 may have a quadrilateral shape.

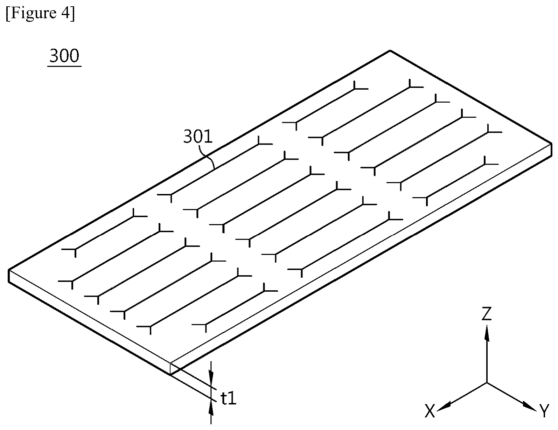

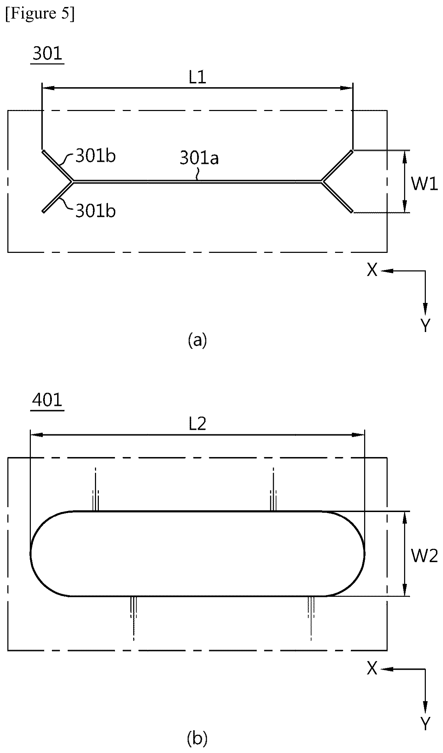

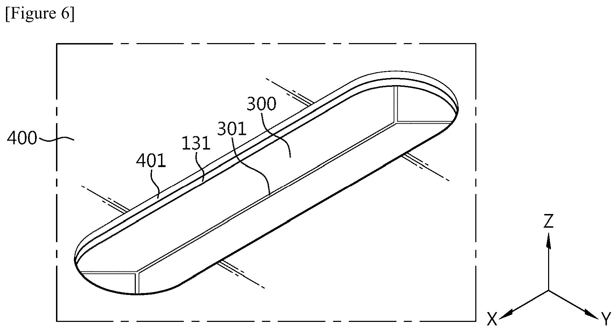

FIG. 4 is a view illustrating the elastic pad 300 of FIG. 2. FIGS. 5A and 5B are enlarged views of a first venting hole 131 and a score line 301 of FIG. 2. FIG. 6 is an enlarged view of portion A of FIG. 1.

Referring to FIGS. 4 to 6, the elastic pad 300 of the battery module, according to an embodiment of the present disclosure, may include a score line 301. The term "score line" 301 may be used as a term that includes and collectively refers to a perforated line, a notching line, a cutting line, a shredding line, a tear line, or a separation line. The score line 301 may be configured to separate easily when pressure is applied to the elastic pad 300.

With this configuration of the present disclosure, the thermal safety of the battery module may be improved. When a thermal event occurs in a battery cell 201, the score line 301 may separate, allowing communication between the internal space of the frame 100 and the first venting hole 131. As a result, the venting gas g may be discharged to the outside of the battery module through the first venting hole 131. By ensuring the smooth discharge of the venting gas g, the propagation of heat inside the battery module may be suppressed.

Referring to FIGS. 4 to 6, a first venting hole 131 of the battery module according to an embodiment of the present disclosure may expose a score line 301. The score line 301 may be formed on the portion of the elastic pad 300 that faces the first venting hole 131. In addition, the score line 301 may be formed only on the portion of the elastic pad 300 exposed by the first venting hole 131. The score line 301, the first venting hole 131, and a second venting hole 401 may be aligned in the vertical direction or the Z-axis direction.

With this configuration of the present disclosure, the thermal safety of the battery module may be improved. The score line 301 may further ensure a smoother discharge of the venting gas g.

Referring to FIGS. 4 to 6, the score line 301 of the battery module, according to an embodiment of the present disclosure, may include a main line 301a and auxiliary lines 301b. The score line 301 may extend in the front-rear direction or the X-axis direction. The main line 301a may also extend in the front-rear direction or the X-axis direction. The auxiliary lines 301b may extend from opposite ends of the main line 301a, respectively. The auxiliary lines 301b may be provided in pairs. One pair of auxiliary lines 301b may form an angle and extend forward from the front end of the main line 301a. In addition, one pair of auxiliary lines 301b may form an angle and extend rearward from the rear end of the main line 301a. For example, the angle formed by one pair of auxiliary lines 301b may be a right angle.

The score line 301 may have a length L1 in the front-rear direction or the X-axis direction. In addition, the first venting hole 131 may have a length L2 in the front-rear direction or the X-axis direction. The length L2 of the first venting hole 131 may be longer than the length L1 of the score line 301.

The score line 301 may have a width W1 in the left-right direction or the Y-axis direction. Similarly, the first venting hole 131 may have a width W2 in the left-right direction or the Y-axis direction. The length W2 of the first venting hole 131 may be longer than the length W1 of the score line 301.

Referring to Figures 4 to 6, a plurality of first venting holes 131 may be provided in the battery module, according to an embodiment of the present disclosure. In addition, a plurality of score lines 301 may be provided. The plurality of score lines 301 may be arranged to correspond one-to-one with the plurality of first venting holes 131.

With this configuration of the present disclosure, the thermal safety of the battery module may be improved. With the provision of the plurality of first venting holes 131 and the score lines 301, the smooth discharge of venting gas g may be ensured.

Referring to FIGS. 4 to 6, the elastic pad 300 of the battery module, according to an embodiment of the present disclosure, may cover the plurality of battery cells 201 or the battery array 200 in its entirety. The elastic pad 300 may entirely cover the top surface of all the battery cells 201 or the top surface of the battery array 200.

With this configuration of the present disclosure, the thermal safety of the battery module may be improved. The elastic pad 300 may block the flow of venting gas g within the battery module by entirely filling the space where the venting gas g could flow.

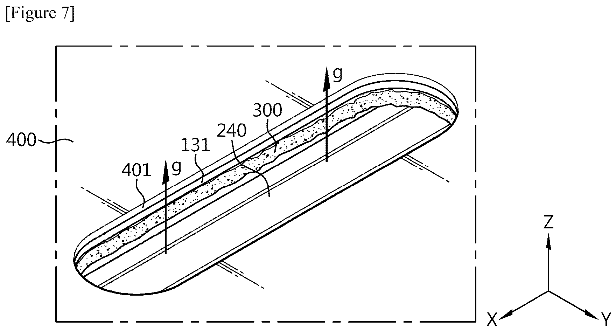

FIG. 7 is an enlarged view of portion A of FIG. 1 during the occurrence of a thermal event. Referring to FIG. 7, the score lines 301 of the battery module, according to an embodiment of the present disclosure, may be configured to partially expose the plurality of battery cells 201 or the battery array 200 during the occurrence of a thermal event.

With this configuration of the present disclosure, the thermal safety of the battery module may be improved. When a thermal event occurs in a battery cell 201, the second seal 240 may rupture, allowing venting gas g to be discharged. The venting gas g may separate the score lines 301 and be discharged to the outside of the battery module through the first venting holes 131 and the second venting holes 401.

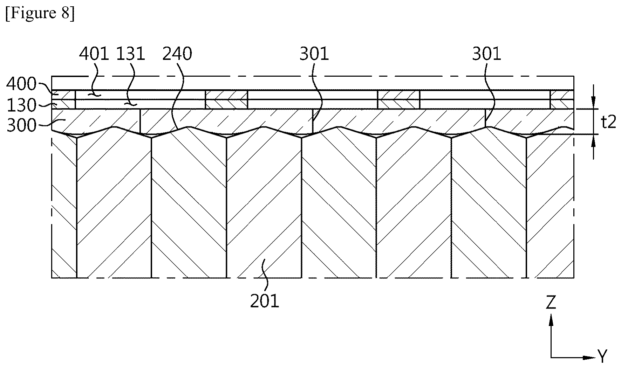

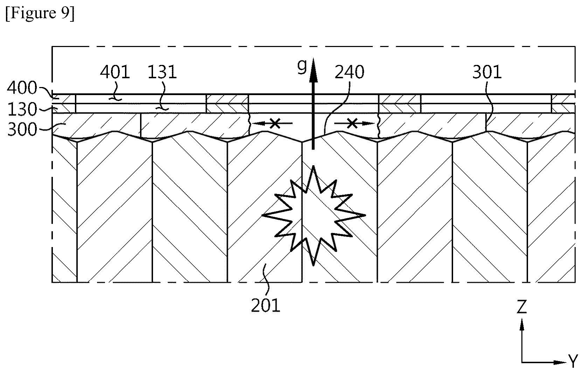

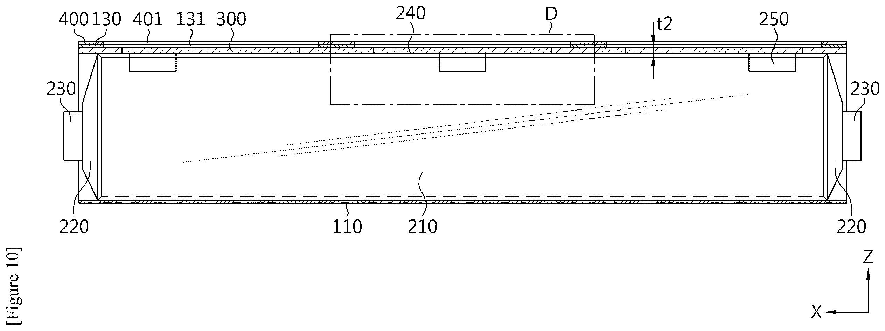

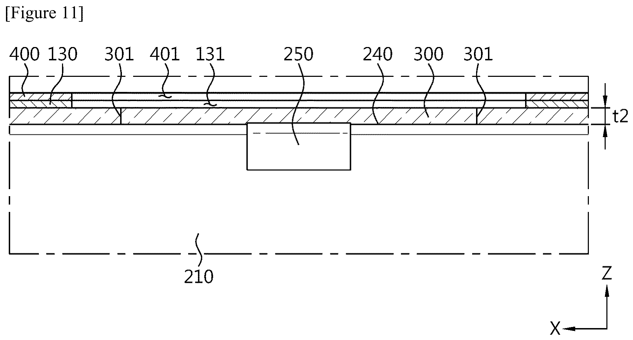

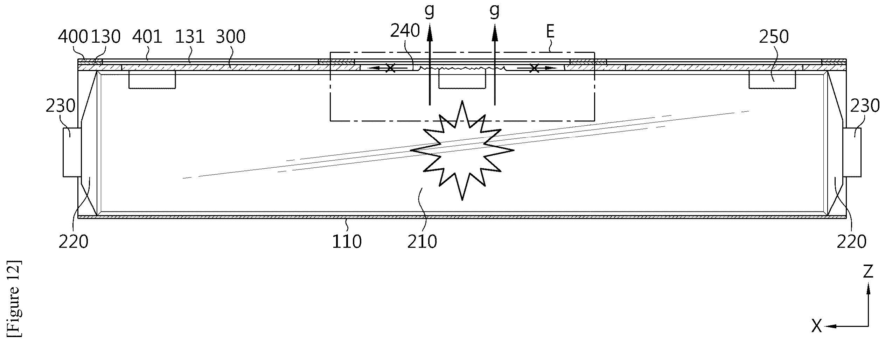

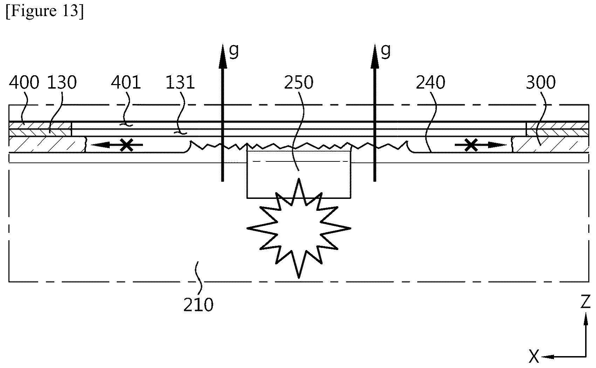

FIG. 8 is a cross-sectional view taken along cutting line B-B' in FIG. 1. FIG. 9 is a cross-sectional view taken along cutting line B-B' in FIG. 1 during the occurrence of a thermal event. FIG. 10 is a cross-sectional view taken along cutting line C-C' in FIG. 1. FIG. 11 is an enlarged view of portion D in FIG. 10. FIG. 12 is a cross-sectional view taken along cutting line C-C' in FIG. 1 during the occurrence of a thermal event. FIG. 13 is an enlarged view of portion E of FIG. 12.

Referring to FIGS. 8 to 13, in the battery module, according to an embodiment of the present disclosure, during the occurrence of a thermal event, venting gas g may separate the score lines 301 and be discharged to the outside of the battery module through the first venting holes 131 and the second venting holes 401. At this time, the elastic pad 300 may block the venting gas g from flowing between the top plate 130 and the battery array 200. In addition, the elastic pad 300 may block the venting gas g from flowing in the left-right direction or the Y-axis direction. Furthermore, the elastic pad 300 may block the venting gas g from flowing in the front-rear direction or the X-axis direction.

A battery pack, according to the present disclosure, may include one or more battery modules described above. For example, the battery pack, according to the present disclosure, may include a pack housing configured to accommodate a plurality of battery modules of the present disclosure therein. When the battery modules, according to the present disclosure, are accommodated, in emergency situations such as thermal runaway, the effect of preventing or suppressing heat propagation between the battery modules is excellent, ensuring sufficient time for users or others to respond or escape.

In addition to the battery modules, the battery pack according to the present disclosure may further include various components, such as a BMS, a busbar, a relay, and a current sensor, known at the time of filing of the present disclosure.

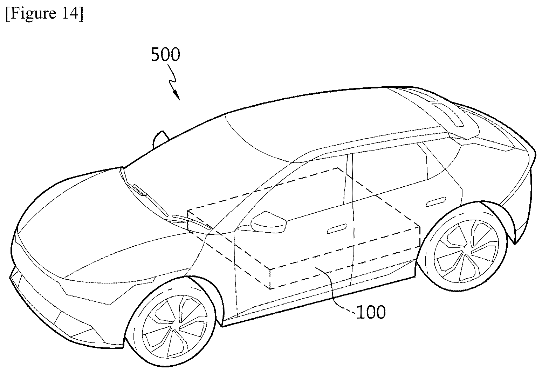

The battery module, according to the present disclosure, may be applied to a vehicle 500 such as an electric vehicle or a hybrid vehicle. In other words, a vehicle 500, according to the present disclosure, may include the battery module or the battery pack, according to the present disclosure. FIG. 14 is a view illustrating a vehicle 500 including a battery module, according to an embodiment of the present disclosure. As illustrated in FIG. 14, the battery frame 100, according to the present disclosure, may be provided in the vehicle 500. The vehicle 500, according to the present disclosure, may further include various other components typically included in a vehicle 500, in addition to the battery module or the battery pack. For example, the vehicle 500, according to the present disclosure, may further include, in addition to the battery module, for example, a vehicle body, a motor, or control devices such as an electronic control unit (ECU).

Although descriptions have been made with reference to embodiments of the present disclosure, a person skilled in the relevant technical field or a person with ordinary skill in the relevant technical field would understand that various modifications and changes may be made to the present disclosure within a scope not departing from the spirit and technical area of the present disclosure described in the patent claims to be described later. Therefore, the technical scope of the present disclosure is not limited to the contents described in the detailed description of the specification, but should be determined by the patent claims.

## Claims

1. A battery module comprising:
a frame configured to provide an internal space, and including a bottom plate and a top plate facing the bottom plate;
a plurality of battery cells positioned on the bottom plate and stacked in one direction; and
an elastic pad compressed between the plurality of battery cells and the top plate.

2. The battery module of claim 1, wherein the top plate includes a first venting hole configured to expose the elastic pad.

3. The battery module of claim 2, wherein the elastic pad includes a score line.

4. The battery module of claim 3, wherein the first venting hole exposes the score line.

5. The battery module of claim 4, wherein the score line is configured to expose a portion of the plurality of battery cells during occurrence of a thermal event.

6. The battery module of claim 3, wherein a plurality of first venting holes is provided, and
wherein multiple score lines are formed to correspond one-to-one with the multiple first venting holes.

7. The battery module of claim 1, wherein the elastic pad entirely covers the plurality of battery cells.

8. The battery module of claim 1, wherein the elastic pad includes a polyurethane material.

9. The battery module of claim 1, further comprising:
a fireproof cover,
wherein the fireproof cover is coupled, fastened, attached, fixed, or assembled to a top surface of the top plate.

10. The battery module of claim 9, wherein the fireproof cover includes a second venting hole.

11. The battery module of claim 10, wherein the top plate includes a first venting hole configured to expose the elastic pad, and
wherein the first venting hole and the second venting hole are formed to correspond one-to-one.

12. The battery module of claim 11, wherein the elastic pad includes a score line, and
wherein the score line, the first venting hole, and the second venting hole are aligned in an up-down direction.

13. The battery module of claim 12, wherein, during occurrence of a thermal event, venting gas separates the score line and is discharged outside the battery module through the first venting hole and the second venting hole.

14. The battery module of claim 1, further comprising:
a heat transfer member provided between the bottom plate and the plurality of battery cells.

15. A battery pack comprising the battery module of claim 1.

16. A vehicle comprising the battery module of claim 1.
